# EUROPÄISCHE PATENTANMELDUNG

(11) **EP 3 272 657 A1**
(43) Veröffentlichungstag der Anmeldung: **24.01.2018**
(21) Anmeldenummer: 17172611.0
(22) Anmeldetag: 24.05.2017
(51) Int. Cl.: B65B 7/16, B65B 43/52, B65G 37/02

(54) **VERPACKUNGSANLAGE**

(30) Priorität: 21.07.2016 DE 102016213310
(71) Anmelder: MULTIVAC Sepp Haggenmüller SE & Co. KG, 87787 Wolfertschwenden (DE)
(72) Erfinder: ICKERT, Lars, 87437 Kempten (DE); OSTERRIEDER, Franz, 87730 Bad Grönenbach (DE); TAGHIPOUR, Alireza, 87539 Kempten (DE)
(74) Vertreter: Grünecker Patent- und Rechtsanwälte PartG mbB

(57) **Zusammenfassung**

Die Erfindung bezieht sich auf eine Verpackungsanlage (1) umfassend wenigstens eine Siegelvorrichtung (3, 4) zum Verschließen einer einzelnen Schale (5) oder einer Gruppe (G) von mehreren Schalen (5) mit einer Deckelfolie (30), wobei die Schale (5) oder die Gruppe (G) von Schalen (5) gemeinsam aufnehmbar ist/sind in einem transportablen Träger (4), ferner umfassend eine Entnahmestation (12) zum Entnehmen der verschlossenen Schalen (5) aus dem Träger (4) heraus und eine Einlegestation (13) zum Einlegen von Schalen (5) in den Träger (4).

## Beschreibung

Die Erfindung bezieht sich auf eine Verpackungsanlage für Schalen gemäß dem Oberbegriff des Anspruchs 1.

Die unveröffentlichte ältere Anmeldung EP 15 154 871.6 beschreibt eine Verpackungsanlage, die Objektträger mit mehreren Schalen ringförmig zu verschiedenen Arbeitsstationen wie Schaleneinleger, Schalenverschließmaschine, Etikettiervorrichtung und Entnahmeeinrichtung transportiert. Dabei dienen die Objektträger als wiederverwendbare Transporteinheiten für die Schalen. Nachteilig an einer solchen ringförmig ausgeführten Verpackungsanlage ist der mitunter hohe Platzbedarf. Beschrieben sind solche Objektträger auch in der EP 2883684 A1. Eine nicht gattungsgemäße Anlage, nämlich eine Schalenverschließmaschine ohne Objektträger, geht aus der WO 2014/199161 A1 hervor.

Aufgabe der Erfindung ist es, eine Verpackungsanlage mit Trägern für Schalen mit einem geringeren Platzbedarf bereitzustellen.

Diese Aufgabe wird gelöst durch eine Verpackungsanlage mit den Merkmalen des Anspruchs 1. Vorteilhafte Weiterbildungen der Erfindung sind in den Unteransprüchen angegeben.

Die erfindungsgemäße Verpackungsanlage umfasst wenigstens eine Siegelvorrichtung zum Verschließen einer einzelnen Schale oder einer Gruppe von mehreren Schalen mit einer Deckelfolie, wobei die Schale oder die Gruppe von Schalen aufnehmbar ist bzw. sind in einem transportablen Träger, sowie eine Entnahmestation zum Entnehmen der verschlossenen Schalen aus dem Träger heraus und eine Einlegestation zum Einlegen von Schalen in den Träger. Die Verpackungsanlage zeichnet sich dadurch aus, dass eine erste Transportvorrichtung zum Transportieren der Träger in einer ersten Produktionsrichtung und eine zweite Transportvorrichtung zum Transportieren des Trägers in einer zweiten Produktionsrichtung vorgesehen sind, wobei die erste Produktionsrichtung entgegengesetzt der zweiten Produktionsrichtung ist und die erste Transportvorrichtung parallel zur zweiten Transportvorrichtung ausgerichtet ist, wobei an den Enden der Transportvorrichtungen jeweils eine Umsetzeinrichtung zum Umsetzen der Träger von einer Transportvorrichtung auf die andere Transportvorrichtung vorgesehen ist. So hat die Verpackungsanlage nur einen minimalen Platzbedarf.

Vorzugsweise ist eine Produktzuführstation zum Befüllen der Schalen mit einem Produkt vorgesehen, um lediglich leere Schalen an der Einlegestation der Verpackungsanlage zu Beginn des Verpackungsprozesses zu zuführen.

Bevorzugt ist wenigstens eine Umsetzeinrichtung zum linearen (translatorischen) Umsetzen des Trägers vorgesehen, um mittels einer konstruktiv einfachen Ausführung eine platzsparende Möglichkeit für einen Wechsel des Trägers zwischen den Transportvorrichtungen zu ermöglichen.

Alternativ oder zusätzlich ist wenigstens eine Umsetzeinrichtung zum rotativen Umsetzen des Trägers um 180° vorgesehen, um die Orientierung des Trägers beim Wechsel zwischen den Transportbändern beibehalten zu können. Damit ist gemeint, dass der Träger immer mit seiner Vorderseite, nämlich aus Sicht des Trägers, voraus durch die Verpackungsanlage transportiert werden kann.

In einer vorteilhaften Ausführung sind die Transportvorrichtungen an einem gemeinsamen Gestell angeordnet, um eine besonders platzsparende Anordnung zu ermöglichen.

Vorzugsweise sind eine Etikettiervorrichtung und/oder entweder ein Metalldetektor oder ein Röntgendetektor vorgesehen. So werden möglichst viele Produktionsschritte auf einer einzigen Verpackungsanlage durchgeführt, während sich die Schalen im Träger befinden.

Bevorzugt ist eine zweite Siegelvorrichtung vorgesehen, um beispielsweise eine erste Folie als Skinfolie und eine zweite Folie als Deckelfolie auf die Schalen aufzubringen. Alternativ können zwei Siegelstationen Schalen mit unterschiedlichen Abmessungen versiegeln. Dabei werden die entsprechenden Träger mit den entsprechenden Schalen entweder der ersten oder der zweiten Siegelstation zugeführt. So können ohne Umrüsten auf einer Verpackungsanlage unterschiedliche Schalen abwechselnd gesiegelt werden. Oder es können auch unterschiedliche Produkte mit unterschiedlichen Deckelfolien in gleichen Schalen verpackt werden.

In einer besonders vorteilhaften Ausführung sind eine Entnahmestation zur Entnahme von Packungen aus dem Träger und/oder eine Einlegestation zum Einlegen von Schalen in den Träger vorgesehen, um weitestgehend alle Produktionsschritte automatisiert ausführen zu können.

Dabei umfasst die Entnahmestation vorzugsweise einen Roboter zur Entnahme einer Gruppe von Packungen, um beispielsweise mit einem Entnahmevorgang alle Verpackungen gleichzeitig aus einem Träger zu entnehmen und den Umsetzvorgang des leeren Trägers in möglichst kurzer Zeit ausführen zu lassen. Der Abstand zwischen den beiden Transportvorrichtungen, gemessen senkrecht zu deren Transport- oder Produktionsrichtungen, ist idealerweise möglichst klein, beispielsweise maximal 50 mm, maximal 100 mm oder maximal 200 mm.

Im Folgenden wird die Erfindung anhand von Ausführungsformen mit den beigefügten Zeichnungen erläutert. Dabei zeigen:
- Figur 1:: eine schematisch dargestellte Verpackungsanlage in der Draufsicht und
- Figur 2:: eine Variante der Verpackungsanlage, und
- Figur 3:: einen Vertikalschnitt durch die Verpackungsanlage an der in Fig. 1 mit III bezeichneten Stelle.

Gleiche Komponenten sind in den Figuren durchgängig mit gleichen Bezugszeichen versehen worden.

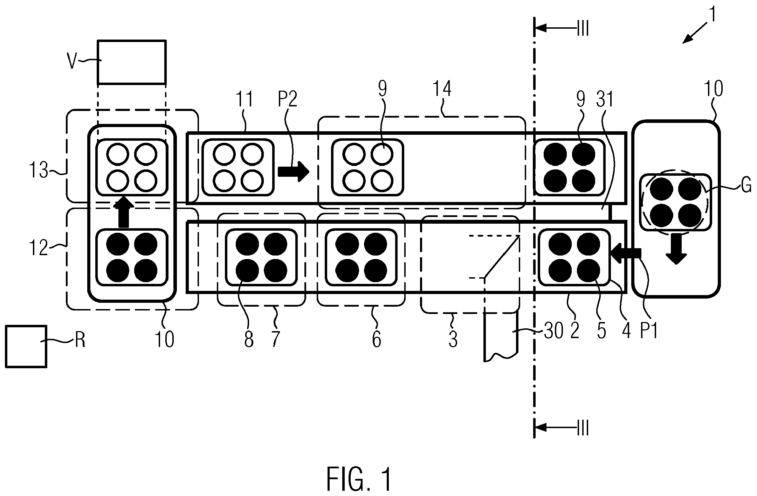

Fig. 1 zeigt eine erfindungsgemäße Verpackungsanlage 1 mit einer ersten Transportvorrichtung 2, die vor und nach einer ersten Siegelvorrichtung 3 oder sich entlang der ersten Siegelstation 3 erstreckend angeordnet ist. Die erste Transportvorrichtung 2 transportiert Träger 4 für eine Schale 5 oder eine Gruppe G von Schalen 5, hier als Gruppe G mit vier Schalen 5 gezeigt, in einer ersten Produktionsrichtung P1 zur ersten Siegelvorrichtung 3. In Produktionsrichtung P1 auf die Siegelstation 3 stromabwärts folgend können ein Metalldetektor 6 (oder ein Röntgendetektor 6) und/oder eine Etikettiervorrichtung 7 entlang der ersten Transportvorrichtung 2 vorgesehen sein. Die Etikettiervorrichtung 7 kann dazu konfiguriert sein, jeweils ein nicht näher dargestelltes Etikett auf jede Packung 8 aufzubringen. Als Packung 8 wird eine Schale 5 mit einem darin eingefüllten Produkt 9 bezeichnet, die mit einer Deckelfolie 30 in der Siegelvorrichtung 3 verschlossen wurde.

Am linken Ende der in Figur 1 dargestellten Verpackungsanlage 1 ist eine Umsetzeinrichtung 10 gezeigt, die den Träger 4 von der ersten Transportvorrichtung 2 übernimmt oder übergeben bekommt und diesen Träger 4 linear (d. h. translatorisch) und orthogonal zur ersten Produktionsrichtung P1 nach oben umsetzt, um den Träger 4 nachfolgend auf eine zweite Transportvorrichtung 11 zu übergeben oder von der zweiten Transportvorrichtung 11 übernommen zu werden. In der Fig. 1 sind an der Umsetzeinrichtung 10 sowohl eine Entnahmestation 12 als auch eine Einlegestation 13 angeordnet. Die Entnahmestation 12 entnimmt einzelne Packungen 8 oder eine Gruppe G von Packungen 8. Als Entnahmestation 12 sind beispielsweise ein manuelles Entnehmen durch eine Bedienperson oder auch ein Roboter R denkbar. Die Entnahmestation 12 nimmt alle Packungen 8 aus dem Träger 4 heraus und führt sie beispielsweise einer Endverpackung zu. Die Entnahmestation 12 kann für die manuelle Entnahme eine nicht näher dargestellte Aushebevorrichtung aufweisen, um die Packungen 8 soweit aus dem Träger 4 nach oben anzuheben, dass auch ein händisches Ergreifen auf einfache Art ermöglicht ist.

Die Einlegestation 13 legt leere Schalen 5 in den Träger 4 ein. Als Einlegestation 13 sind beispielsweise ein manuelles Einlegen durch eine Bedienperson oder auch eine Abstapelvorrichtung V, auch als Denester bezeichnet, denkbar. Die zweite Transportvorrichtung 11 transportiert den Träger 4 in einer der ersten Produktionsrichtung P1 entgegengesetzten zweiten Produktionsrichtung P2 einer Produktzuführstation 14 zu, mittels derer ein oder mehrere Produkte 9 den jeweiligen Schalen 5 zugeführt werden.

Am rechten Ende der in Figur 1 dargestellten Verpackungsanlage 1 ist eine weitere Umsetzeinrichtung 10 gezeigt, die den Träger 4 von der zweiten Transportvorrichtung 11 übernimmt oder übergeben bekommt und diesen Träger 4 linear und orthogonal zur zweiten Produktionsrichtung P2 umsetzt, um den Träger 4 nachfolgend auf die erste Transportvorrichtung 2 zu übergeben.

Die Transportvorrichtungen 2, 11 können Transportriemen aufweisen, auf denen die Träger 4 aufliegen und in Produktionsrichtung P1, P2 gefördert werden. Alternativ sind auch quer zur Produktionsrichtung P1, P2 ausgerichtete Stäbe, wie sie aus DE 202012006699 A1 bekannt sind, möglich, die beidseitig mittels nicht näher dargestellten Transportketten die Träger 4 schieben. Dabei weisen die Stäbe meist einen gleichen Abstand zueinander auf.

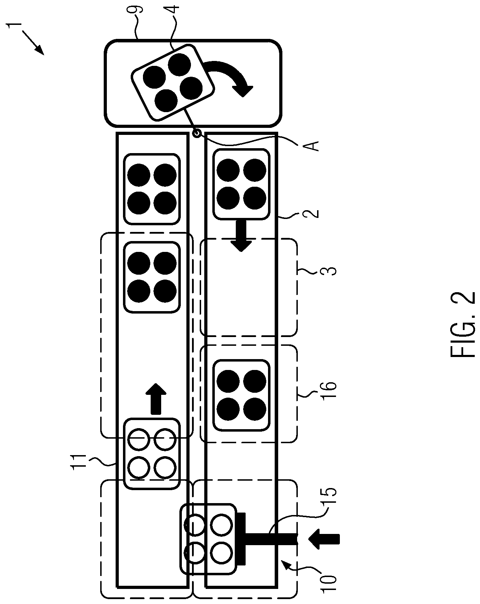

Die Umsetzeinrichtung 10 kann als eigenes angetriebenes (vorzugsweise servomotorisch angetriebenes) Transportband wie in Fig. 1 gezeigt ausgeführt sein oder einen pneumatisch angetriebenen Schieber 15 umfassen, der den Träger 5 von der ersten Transportvorrichtung 2 zur zweiten Transportvorrichtung 11 hinüberschiebt, wie in der Darstellung in Fig. 2 an der linken Seite gezeigt.

Fig. 2 zeigt am rechten Ende der Verpackungsanlage 1 eine alternative Ausführung der Umsetzeinrichtung 10, bei der der Träger 4 um eine vertikale Achse A um 180° gedreht wird und dabei die Vorderkante des Trägers 4 stets in der jeweiligen Transportrichtung bzw. Produktionsrichtung P1, P2 vorne liegt.

Unter die Erfindung fallen auch Ausführungen der Verpackungsanlage 1 mit einer zusätzlichen zweiten Siegelvorrichtung 16 oder mit Trägern 4, die eine von vier verschiedene Anzahl von Schalen 5 aufnehmen können.

Die erste 2 und zweite Transportvorrichtung 11 können an einem nicht näher dargestellten Gestell 31 angeordnet sein. Dabei ist das Gestell 31 in vorteilhafter Weise das gemeinsame Maschinengestell der Verpackungsanlage 1, siehe Fig. 1.

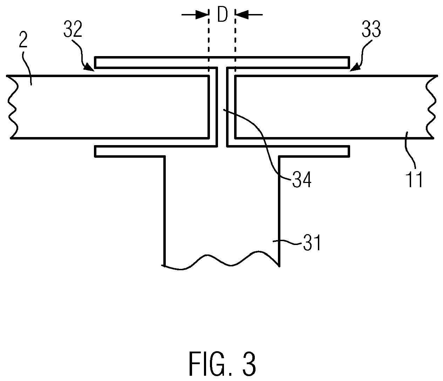

Fig. 3 zeigt als Ausschnitt einen Vertikalschnitt durch eine erfindungsgemäße Verpackungsanlage 1 an der in Fig. 1 mit III-III bezeichneten Stelle. Dargestellt ist in Fig. 3 der Bereich zwischen den beiden Transportvorrichtungen 2, 11.

Am Gestell 31 der Verpackungsanlage 1 sind eine erste Führung 32 für die erste Transportvorrichtung 2 und eine zweite Führung 33 für die zweite Transportvorrichtung 11 vorgesehen. Die Führungen 32, 33 weisen jeweils etwa T-förmige, seitlich offene Profile auf. In den Führungen 32, 33 werden die Transportvorrichtungen 2, 11 in horizontaler Richtung geführt.

Im dargestellten Ausführungsbeispiel bilden die beiden Führungen 32, 33 gemeinsam ein etwa H-förmiges Profil aus, das am Maschinengestell 31 befestigt oder sogar einstückig mit Teilen des Maschinengestells 31 ausgebildet sein kann. Der Abstand D in horizontaler Richtung zwischen den beiden Transportvorrichtungen 2, 11 kann erfindungsgemäß besonders klein gehalten werden und beispielsweise maximal 50 mm, maximal 100 mm oder maximal 200 mm betragen. Der Abstand D kann beispielsweise gegeben sein durch die Stärke eines Steges 34 zwischen den beiden Führungen 32, 33.

## Patentansprüche

1. Verpackungsanlage (1), umfassend wenigstens eine Siegelvorrichtung (3, 4) zum Verschließen einer einzelnen Schale (5) oder einer Gruppe (G) von mehreren Schalen (5) mit einer Deckelfolie (30), wobei die Schale (5) oder die Gruppe (G) von Schalen (5) gemeinsam aufnehmbar ist/sind in einem transportablen Träger (4), ferner umfassend eine Entnahmestation (12) zum Entnehmen der verschlossenen Schalen (5) aus dem Träger (4) heraus und eine Einlegestation (13) zum Einlegen von Schalen (5) in den Träger (4), **dadurch gekennzeichnet, dass** eine erste Transportvorrichtung (2) zum Transportieren der Träger (4) in einer ersten Produktionsrichtung (P1) und eine zweite Transportvorrichtung (11) zum Transportieren des Trägers (4) in einer zweiten Produktionsrichtung (P2) vorgesehen sind, wobei die erste Produktionsrichtung (P1) entgegengesetzt der zweiten Produktionsrichtung (P2) ist und die erste Transportvorrichtung (2) parallel zur zweiten Transportvorrichtung (11) ausgerichtet ist, wobei an den Enden der Transportvorrichtungen (2, 11) jeweils eine Umsetzeinrichtung (10) zum Umsetzen der Träger (4) von einer Transportvorrichtung (2, 11) auf die andere Transportvorrichtung (2, 11) vorgesehen ist.

2. Verpackungsanlage nach Anspruch 1, **dadurch gekennzeichnet, dass** eine Produktzuführstation (14) zum Befüllen der Schalen (5) mit einem Produkt (9) vorgesehen ist.

3. Verpackungsanlage nach einem der vorangehenden Ansprüche, **dadurch gekennzeichnet, dass** wenigstens eine Umsetzeinrichtung (10) zum translatorischen Umsetzen des Trägers (4) vorgesehen ist.

4. Verpackungsanlage nach einem der vorangehenden Ansprüche, **dadurch gekennzeichnet, dass** wenigstens eine Umsetzeinrichtung (10) zum rotativen Umsetzen des Trägers (4) um 180° oder um zweimal 90° vorgesehen ist.

5. Verpackungsanlage nach einem der vorangehenden Ansprüche, **dadurch gekennzeichnet, dass** die Transportvorrichtungen (2, 11) an einem gemeinsamen Gestell (31) angeordnet sind.

6. Verpackungsanlage nach einem der vorangehenden Ansprüche, **dadurch gekennzeichnet, dass** eine Etikettiervorrichtung (7) und/oder entweder ein Metalldetektor (6) oder ein Röntgendetektor (6) vorgesehen sind.

7. Verpackungsanlage nach einem der vorangehenden Ansprüche, **dadurch gekennzeichnet, dass** eine zweite Siegelvorrichtung (16) vorgesehen ist.

8. Verpackungsanlage nach einem der vorangehenden Ansprüche, **dadurch gekennzeichnet, dass** die Entnahmestation (12) und/oder die Einlegestation (13) jeweils an einer Umsetzeinrichtung (10) vorgesehen sind.

9. Verpackungsanlage nach einem der vorangehenden Ansprüche, **dadurch gekennzeichnet, dass** die Entnahmestation (12) einen Roboter (R) zur Entnahme einer Gruppe (G) von Packungen (5) aufweist.

10. Verpackungsanlage nach einem der vorangehenden Ansprüche, **dadurch gekennzeichnet, dass** ein Abstand (D) in horizontaler Richtung zwischen der ersten und der zweiten Transportvorrichtung (2, 11) maximal 50 mm, maximal 100 mm oder maximal 200 mm beträgt.

11. Verpackungsanlage nach einem der vorangehenden Ansprüche, **dadurch gekennzeichnet, dass** Führungen (32, 33) für die Transportvorrichtungen (2, 11) an dem Gestell (31) angeordnet sind.
